# EUROPEAN PATENT SPECIFICATION

(11) **EP 0 653 910 B1**
(45) Date of publication and mention of the grant of the patent: **23.08.2000**
(21) Application number: 94916360.4
(22) Date of filing: 03.06.1994
(51) Int. Cl.: A01G 9/24, C05G 3/04, C05F 11/02, C05D 3/02, A01G 1/00

(54) **METHOD OF CULTIVATION OF COAL AND LIGNITE INFIELDS FORMED BY UNCOVERING (OPEN CAST MINING)**
VERFAHREN ZUR REKULTIVIERUNG VON DURCH ABRÄUMEN (TAGEBAU) GEBILDETEN KOHLEN- UND LIGNITFELDERN
PROCEDE POUR CULTIVER DES TERRAINS CARBONIFERES ET LIGNITIFERES APRES LA FIN DES FOUILLES (EXPLOITATION A CIEL OUVERT)

(30) Priority: 04.06.1993 GR 93100228
(43) Date of publication of application: 24.05.1995
(73) Proprietor: COMPOSTELLA Compania Maritime Ltd., 1010 Nicosia (CY)
(72) Inventor: VALKANAS, George, N., GR-151 32 Marousi (GR)
(74) Representative: Dossmann, Gérard
(86) International application number: GR9400012
(87) International publication number: WO9428705

(56) References cited:
- EP-A- 0 140 795
- CH-A- 600 747
- DE-A- 4 105 595
- DE-C- 3 713 055
- DATABASE WPI Section Ch, Week 8119, Derwent Publications Ltd., London, GB; Class L02, AN 81-33443D & JP,A,56 028 689 (MITSUBISHI HEAVY IND KK) 20 March 1981

## Description

### FIELD OF INVENTION

The invention describes a method of treating lignite and coal fields resulting from the technique of uncovering in order to make it suitable for greenhouse cultivation. This method specifically describes an original approach of introducing technological products in those fields, which promote water economy, water availability and nutritional efficiency in the soils of lignite and coal fields after extraction of the carbonaceous matter and of introducing agricultural utilisation with massive operation of greenhouses.

### BACKGROUND OF INVENTION

Lignite and coal fields which result from the uncovering, after the extraction of richer deposits and with rejected earth stacked in heaps, form surfaces containing carboneous matter which in general are not equilibrated soils and do not show fertility. These soil surfaces from uncovering and from rejected aggregates in heaps, contain sulphur, usually in high amounts 0,5-3%. Sulphur contained in such soil is converted very rapidly to sulphuric acid through the oxidative action of thiooxidative bacteria which oxidise sulphur.

The soils of lignite and coal fields which are formed with the technique of uncovering are considered problematic and toxic and are treated internationally with two technical solutions:
a. The solution of covering the fields with fertile top-soil in a depth of 0.8 to 1.20 m which is a very expensive and laborious approach, which, in spite of these difficulties, is the technical solution in application today.
b. The solution of removing the top-soil before the uncovering technique of the carbonaceous deposit. Top-soil is collected in rolls and is kept in covered shelters until the field deposits are exhausted; then it is placed on the surface of the resulting field. This solution is technically and ecologically correct; however, it is not followed in practice because it is a solution of high sensitivity and of high cost.

Thus, the restoration of the soils resulting after mining carbon, lignite or peat deposits is difficult. To improve restoration of fertile soils is a problem in need of a solution since those fields do not improve naturally. These coal or lignite fields, apart from the above, face problems because of soil instability and of inability to retain water. They are also charged continuously by urban acid precipitates. In case of lengthy operation of thermoelectrical plants, that charge may result to neutralising all the alkalinity of the soil to form acidic paths or areas.

DE-A-4 105 595 discloses a method whereby mined soil is mixed with pulverized calcium carbonate.

It is estimated that 60% at least of the sulphur in the carbonaceous matter after burning to produce electricity will precipitate as a gas or in the form of fly ash on the lignite or coal mining area.

They make quantities which on operating fields give the following charges (in tons/y).

**TABLE**

| Lignite field | Burned Lignite | Fly ash | SO₂ | NOx |
|---|---|---|---|---|
| Megalopolis, Greece | 15.000.000 | 60.000 | 200.000 | 150.000 |
| Ptolemais, Greece | 45.000.000 | 120.000 | 300.000 | 500.000 |

All the above acid precipitates are burdening the ground of the district and neutralise soil alkalinity in a continuous action. But alkalinity is marginal and the final result will be to form acid areas and paths. It is recognised that the sulphur contained in the soil of lignite fields attains high values and with agricultural activity the biological oxidation of sulphur to sulphuric acid will accelerate with destruction of the soil functioning, shown by analysis made in Megalopolis, Greece, lignite field.

**TABLE**

| Results from the oxidation of soil samples in the lignite field of Megalopolis, Greece. (oxidation of the soil samples with 30% H₂0₂) | |
|---|---|
| Number of sample | pH resulted |
| 1 | 1.80 |
| 2 | 6.20 |
| 3 | 7.10 |
| 4 | 4.80 |
| 5 | 4.10 |
| 6 | 1.50 |
| 7 | 4.20 |
| 8 | 2.90 |

The agricultural utilisation of coal and lignite fields, which are formed with uncovering, is not therefore, feasible today because natural fertility is not available. The solution in use today of fields with soil depth of 0,80-1,20 m. is of high cost and does not offer a good solution, since it is difficult to find much fertile soil to transfer.

The operation of thermoelectrical plants on the other hand continues with mining coal or lignite by uncovering the deposits and burning them to produce more and more airborne precipitates.

On the other hand it is imperative to create agricultural employment for the local population with satisfactory income, and this is only possible through greenhouses, which also operate together with the power plants.

Supplementary heating with the warm cooling waters in vast quantities in these areas will be offered, reducing costs. However greenhouses require humus and water retainability. It is known that the operation of greenhouses leads to soil contamination and in 2 to 4 years greenhouses need be transferred to new grounds. These conditions, however cannot prevail in greenhouses operating in coal and lignite fields since they need to be constructed with high technical quality and transfer is very costly.

### SUMMARY OF INVENTION

The present solution to improve those toxic fields and to introduce greenhouse operation is highly original and very profitable. It is a solution satisfying the above requirements that leads to programmed production, to stable and high water retainability. It operates so that nutrition is available according to existing needs biologically controlled, with complete utilisation regulated to be slowly consumed so that there is no soil deterioration and materials are not rejected in the environment.

The inventive solution, as defined in claim 1, comprises:
a) The utilisation of processed polymeric products which in soil retain water in high amounts (200-300 times their weight). The retained water is quantitatively disposed to serve nutritional needs of the plants since it is molecularly enclosed and does not evaporate nor infiltrate into the ground. In that way water is offered continuously; water economy is improved up to 10 times. In addition these products advance feeding by ion exchange and absorption - desorption of unlimited capacity; thus they act as fertility promoters which by programming can lead to high quality and quantity in food products.
b) The utilisation of fertilisers with a non-water-soluble coating and which are biodegradable in soil.

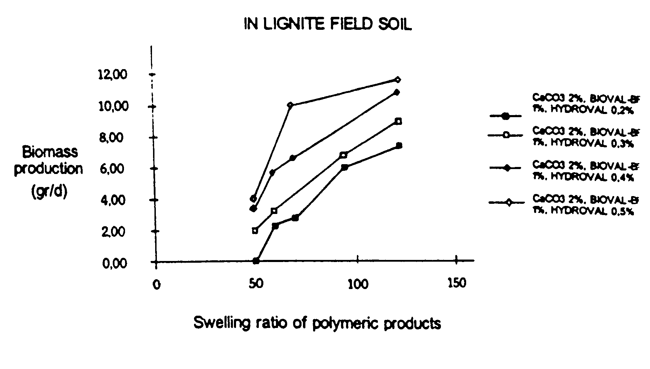

### BRIEF DESCRIPTION OF THE DRAWING

The drawing figure is a graph plotting biomass production as a function of the swelling ratio of polymeric products.

### DETAILED DESCRIPTION

Products of the above type a) and b) are in the market today, such as polyacrylamides used as water superabsorbents and coated feeding element fertilisers, but these are not meeting the above requirements in operating greenhouses in toxic coal and lignite fields.

The above solutions have been realised by the inventor through products that the same inventor has developed, viz, the coated fertilisers of trade name Bioval-BRF described in US Patent 5137 563 and the processed polymers of trade name Hydroval-X described in the relevant Greek patent.

The processed polymer products derived mostly from recycled polymers retain water up to 250 times their weight and are available for plant growth in repeated action to last in soil for many years (up to 30 years). The coated fertilisers etc. are consumed in soil according to the existing biological activity which is advanced by the action of Hydroval-X.

With that pair of technological products continuous nutrition and plant growth in soil is advanced with continuous water offer, water economy and the ability to consume all the nutrients in Bioval-BRF. Therefore no material charges will be created on soil, so as to need replacement. Thus, with this original and highly profitable solution, conditions are formed by which the greenhouse can operate without transposition after 2 to 4 years, which in fact makes a special condition in those fields, where the electricity producing plants still operate and airborne acidic precipitates are produced.

However the soil of coal or lignite fields, where the proposed greenhouses are to operate is unstable and contains sulphur. Thus, by introducing plants to grow and biomass production, it will be oxidised to sulphuric acid. Also, in the intensive operation the greenhouses introduce, those events will be accelerated. The invention solves this problem as follows: the soil in the greenhouse is mixed with pulverised calcium carbonate in quantity and in depth to create safety in operation without risk for destroying greenhouse production by acidic contaminates.

### EXAMPLE 1

The soil where the greenhouses are to be erected is excavated in depth of 1,5 m. width of 25 m. length of 60 m. The soil of excavation is mixed with 1% to 2% calcium carbonate in pulverised form and the hole formed is filled with soil mixed with calcium carbonate leaving an upper layer of 30 cm. The rest of the excavated soil having calcium carbonate is thoroughly mixed with Hydroval-X I o/oo w/w and with Bioval-DRF 5 o/oo w/w and used to fill up the upper empty part of 30 cm depth. On the conditioned ground a greenhouse of sophisticated design is then erected requiring heat supplied by thermoelectrical plants in the form of warm cooling water of steam turbines.

### EXAMPLE 2

Lignite soil of Megalopolis, Greece, which after H₂0₂ oxidation has shown an acidity of pH 6,5 is treated according to Example 1 in a greenhouse erected on this soil with heating network supplied by the cooling water supplied by thermoelectrical plants operating at stable temperature of 30°C and saturated humidity.

The greenhouse soil is planned and parallel to it a frame containing untreated lignite soil is placed and in both were planted tomato infant plants with irrigation applied every 3 days.

| Greenhouse Soil | | Frame Soil |
|---|---|---|
| 6 days | 15 cm growth | 3,8 cm |
| 12 days | 20,3 cm growth | 7,1 cm |
| 20 days | 31 cm growth | 10,2 cm |
| 40 days | 39 cm growth | 12,2 cm |
| tomato plants rich in flowers | | no flowering occurred |
| dry biomass weight 122 gr/plant | | 32 gr/plant |
| i.e. four times speed and development. | | |

### EXAMPLE 3

In lignite soil of Ptolemais, Greece, which by oxidation (H₂O₂) gave pH 5.8 growth of tomato was organised as in Example 2.
The following results were obtained:

| Greenhouse Soil | | Frame Soil |
|---|---|---|
| 6 days | growth 15 cm | 4 cm |
| 12 days | growth 22 cm | 6 cm |
| 20 days | growth 34 cm | all plants were destroyed |
| 40 days growth 43 cm | | |
| tomato plants rich in flowers | | |
| dry biomass produced 129 g/plant | | |

### EXAMPLE 4

On Ptolemais lignite soil, which after oxidation (H₂0₂) gave pH 6,8 , lettuce plants are placed in greenhouse soil and in frame. The greenhouse operates at 30° C and is irrigated every 2 days.

| Greenhouse Soil | | Frame Soil |
|---|---|---|
| 6 days | 16 cm growth | 6 cm |
| 12 days | 21 cm growth | 11,2 cm |
| 20 days | 35 cm growth | 16 cm |
| 40 days | 46 cm growth | 20,1 cm |
| dry biomass production 32 g/plant biomass | | 10.1 g/mass |

### EXAMPLE 5

In the greenhouse soil of example 4 the conditions for water economy were studied. After 12 days of growth, the plants were left without irrigation. Wilting occurred in 42 days of growth. In between growth was regular without differences occurring. There was thus observed a possibility for water economy up to 7 times not affecting growth.

The drawing figure shows an increase in biomass production as the swelling ratio of four polymeric products increases. The polymeric products comprise CaCO₃, Bioval-BRF and Hydroval, with the last being present in each of the respective products in a different percentage.

## Claims

1. Method of treating a field from which coal or lignit has been mined in order to make it suitable for greenhouse cultivation comprising the step of treating the mined soil by mixing the soil with
a) a polymer which in soil retains water in high amounts, the water being molecularly enclosed in that polymer, and the polymer advancing feeding by ion exchange and absorption-desorption,
b) a composition comprising a fertilizer coated by a non water-soluble coating and which is biodegradable in soil, and
c) pulverized calcium carbonate.

2. Method according to claim 1 characterized in that the pulverized calcium carbonate is introduced into the soil in quantity and depth so as to create safety in operations without risk for destroying the plant production by acidic contaminates.

3. Method according to claim 2 in which 1 to 2 weight % of pulverized calcium carbonate is introduced into the soil.

4. Method according to any one of claims 1 to 3 characterized in that the polymer is derived from recycled polymers and retains water up to 250 times its weight.

5. Method according to any one of claims 1 to 4 characterized in that the fertilizer comprises a coating composition which provides a biologically controlled release of the coated content to the ambient environment comprising 60 to 97 weight % of one or more waxy components and from 40 to 3 weight percent of a rosin mixture comprising from 100 to 60 weight % of rosin having conjuguated double bond resinic acids in an amount of at least 70 weight % and dimerized rosin.

6. Method of cultivation of a field from which coal or lignit has been mined comprising the steps of treating the soil as defined in anyone of claims 1 to 5 and then cultivating said field.

7. Method according to claim 6 characterized in that the cultivation is carried out in green houses.

8. Method according to claim 6 characterized in tat the green houses have heat supplied by thermoelectrical plants in form of the cooling warm water of the plants.

## Patentansprüche

1. Verfahren zur Behandlung eines Feldes, aus welchem Kohle oder Lignit abgebaut wurde, um es für Gewächshauskultivierung geeignet zu machen, umfassend die Stufe der Behandlung des abgebauten Bodens durch Vermischen des Bodens mit
a) einem Polymeren, welches in dem Boden Wasser in hohen Mengen zurückhält, wobei das Wasser molekular in diesem Polymeren eingeschlossen wird und das Polymere die Versorgung durch Ionenaustausch und Absorption - Desorption fördert,
b) einer Zusammensetzung, welche ein Düngemittel umfaßt, das durch eine nicht-wasserlösliche Beschichtung beschichtet ist, und welche im Boden bioabbaubar ist,
c) pulverisiertem Calciumcarbonat.

2. Verfahren nach Anspruch 1, dadurch gekennzeichnet, daß das pulverisierte Calciumcarbonat in den Boden in einer Menge und einer Tiefe eingebracht wird, daß Sicherheit bei Arbeiten ohne Gefahr für die Zerstörung der Pflanzenproduktion durch saure Verunreinigungen erzeugt wird.

3. Verfahren nach Anspruch 2, bei welchem 1 bis 2 Gew.-% pulverisiertes Calciumcarbonat in den Boden eingebracht wird.

4. Verfahren nach einem der Ansprüche 1 bis 3, dadurch gekennzeichnet, daß das Polymere von recycelten Polymeren abstammt und Wasser bis zum 250-fachen seines Gewichtes zurückhält.

5. Verfahren nach einem der Ansprüche 1 bis 4, dadurch gekennzeichnet, daß das Düngemittel eine Beschichtungszusammensetzung umfaßt, welche eine biologisch kontrollierte Freigabe des beschichteten Inhalts in die anliegende Umgebung liefert, umfassend 60 bis 97 Gew.-% von einer oder mehreren wachsartigen Komponenten und von 40 bis 3 Gew.-% einer Kolophoniummischung, welche von 100 bis 60 Gew.-% Kolophonium mit konjugierten Doppelbindungsharzsäuren in einer Menge von wenigstens 70 Gew.-% und dimerisiertes Kolophonium umfaßt.

6. Verfahren zur Kultivierung eines Feldes, aus welchem Kohle oder Lignit abgebaut wurde, umfassend die Stufen der Behandlung des Bodens, wie in einem der Ansprüche 1 bis 5 definiert, und dann Kultivieren dieses Feldes.

7. Verfahren nach Anspruch 6, dadurch gekennzeichnet, daß die Kultivierung in Gewächshausern durchgeführt wird.

8. Verfahren nach Anspruch 6, dadurch gekennzeichnet, daß die Gewächshäuser Wärme von wärmeelektrischen Anlagen in Form des Abkühlens von Warmwasser der Anlagen geliefert bekommen.

## Revendications

1. Procédé de traitement d'un terrain duquel a été extrait de la houille ou du lignite afin de le rendre apte à la culture sous serre, comprenant l'étape consistant à traiter le sol exploité en incorporant dans le sol
a) un polymère qui, dans le sol, retient l'eau en grande quantité, l'eau étant piégée au niveau moléculaire au sein de ce polymère, et le polymère faisant avancer l'alimentation par échange d'ions et absorption-désorption,
b) une composition comprenant un engrais enrobé d'une pellicule non soluble dans l'eau et qui est biodégradable dans le sol, et
c) du carbonate de calcium pulvérisé.

2. Procédé selon la revendication 1, caractérisé en ce que le carbonate de calcium pulvérisé est introduit dans le sol en quantité et en profondeur afin d'assurer la sécurité des opérations et sans risque de détruire la production de plantes par des impuretés acides.

3. Procédé selon la revendication 2, dans lequel on introduit dans le sol 1 à 2 % en poids de carbonate de calcium pulvérisé.

4. Procédé selon l'une quelconque des revendications 1 à 3, caractérisé en ce que le polymère est dérivé de polymères recyclés et retient l'eau jusqu'à 250 fois son poids.

5. Procédé selon l'une quelconque des revendications 1 à 4, caractérisé en ce que l'engrais comprend une composition d'enrobage qui permet une libération commandée biologiquement du contenu enrobé dans l'environnement ambiant comprenant 60 à 97 % en poids d'un ou plusieurs composant(s) cireux et de 40 à 3 pour cent en poids de mélange de colophane comprenant de 100 à 60 % en poids de colophane comportant des acides résiniques à liaison double conjuguée en une quantité d'au moins 70 % en poids et de colophane dimérisée.

6. Procédé de culture d'un terrain duquel a été extrait de la houille ou du lignite comprenant les étapes consistant à traiter le sol comme défini dans l'une quelconque des revendications 1 à 5 puis à cultiver ledit terrain.

7. Procédé selon la revendication 6 caractérisé en ce que la culture est réalisée dans des serres.

8. Procédé selon la revendication 6 caractérisé en ce que les serres sont chauffées par des centrales thermiques grâce à l'eau de refroidissement chauffée des centrales.
